# EUROPÄISCHE PATENTSCHRIFT

(11) **EP 1 434 003 B1**
(45) Veröffentlichungstag und Bekanntmachung des Hinweises auf die Patenterteilung: **31.10.2007**
(21) Anmeldenummer: 03028042.4
(22) Anmeldetag: 08.12.2003
(51) Int. Cl.: F23G 5/00, F23G 5/02, F23G 5/027, F23G 5/033, F23G 5/05, F23G 5/12, F23G 5/24

(54) **Verfahren und Vorrichtung zur Aufbereitung und Verwertung von festen und flüssigen Abfallgemischen**
Method and apparatus for the treatment and recycling of solid and liquid waste mixtures
Méthode et dispositif pour le traitement et le recyclage de mélanges de déchets solides et liquides

(30) Priorität: 23.12.2002 DE 10261537
(43) Veröffentlichungstag der Anmeldung: 30.06.2004
(73) Patentinhaber: UBB Magdeburg Kipper & Dr. Stegmann GbR, 39104 Magdeburg (DE)
(72) Erfinder: Kipper, Bernd-Rüdiger, 39167 Irxleben (DE); Stegmann, Ulrich, Dr., 39128 Magdeburg (DE); Zingelmann, Jochen, 53639 Königswinter (DE); Eberhardt, Claus, 71287 Weissach-Flacht (DE)
(74) Vertreter: Kagelmann, Manfred

(56) Entgegenhaltungen:
- EP-A- 0 770 820
- EP-A- 1 018 371
- WO-A-94/17161
- DE-A- 3 226 798
- DE-A- 19 853 713
- DE-C- 4 435 166
- US-B1- 6 178 899

## Beschreibung

Die Erfindung betrifft ein Verfahren und eine komplexe Vorrichtung, bestehend aus mehren speziellen Vorrichtungen zur Aufbereitung und zur Verwertung von festen und/oder von flüssigen Abfallstoffen und/oder deren Gemische, insbesondere zur hochwertigen energetischen Verwertung deren organischer Stoffbestandteile.

Bekannt ist ein Verfahren zur stofflichen und energetischen Verwertung von Restund Abfallstoffen, wobei zunächst ein Brennstoffballen aus Abfallstoffen industriellen Aufkommens hergestellt wird, der dann nach dem ARLIS-Verfahren, das ist eine aus der Noell-Technologie abgeleitete Flugstromvergasung, vergast wird, wobei das so erzeugte Gas unter Einsatz von Primärenergie entschwefelt werden muss. Die verbleibende Asche ist ein Schmelzgranulat. Das so erhaltene gereinigte und entschwefelte Brenngas wird sodann in einem Heizkraftwerk zur Energieerzeugung verbrannt (DE 198 53 713 C2). Dieses Verfahren eignet sich ausschließlich für Abfallstoffe aus industriellem Aufkommen und ist auch kein Abfallverwertungsverfahren sondern ein Abfallbeseitigungsverfahren.

Ein anders Verfahren und eine andere Einrichtung zur thermischen Abfallverwertung und Abfallentsorgung fester, flüssiger und pumpfähiger inhomogener brennbarer Abfallgemische und thermischer Reinigung kontaminierter Materialien in einer Wirbelschichtfeuerung ist eine klassische Wirbelschicht-MVA-Anlage primär zur Beseitigung von festen und flüssigen Schadstoffen mittels Wirbelschichtverbrennung (DE 198 59 052 A1). Nachteilig ist daran, ebenso wie am MBA-Verfahren, die äußert geringe Verwertungsquote von 0,3 Tonnen pro Tonne Abfall weiter zu behandelnder oder deponiepflichtiger Restmenge. Die Aschen sind in der Regel eluierbar und dotieren Schwermetalle in die Hydrosphäre. Dies Technologie verursacht insgesamt sehr hohe und bei einer Vielzahl von Inputmaterialien darüber hinaus auch noch unkontrollierte Emissionen.

Bekannt ist weiterhin ein Verfahren zur mechanisch biologischen Abfallbehandlung fester sperriger und hausmüllähnlicher Siedlungsabfälle mit energetischer und stofflicher Kopplung der biologischen und physikalischen Prozesse (DE 101 25 408 A1) Dabei handelt es sich um ein klassisches MBA-Verfahren, dessen Produkt ein Biogas ist, welches mit bekannter Bioheizkraftwerkstechnik energetisch umgesetzt wird und bei welchem ein Abgas entsteht.

Ein weiteres, ähnliches Abfallbehandlungsverfahren ist aus der DE 3226798 A1 bekannt.

Sortierreste werden in teils bekannter Weise einer anderen Verwertung oder einer Deponie zugeführt und auch nicht verrottbare Fraktionen sind einer weiteren Nachbehandlung zuzuführen.

Die nachzubehandelnde bzw. zu deponierende Restmenge ist mit etwa 0,4 Tonnen pro Tonne Abfall relativ hoch. Es sind 40% der Eingangsmengen nicht deponiefähig und müssen mittels anderer Verfahren aufwändig weiter behandelt werden. Das Deponiegut aus diesem Verfahren wird bei Wasserkontakt wieder biologisch aktiv und bildet so das unerwünschte Deponiegasgemisch aus Methan und anderen klimaschädlichen Gasen.

Aufgabe der Erfindung ist es, ein Verfahren zur Aufbereitung von festen und flüssigen Abfallgemischen und zur Verwertung derselben sowie eine Vorrichtung zur Durchführung des Verfahrens zuschaffen, womit eine sehr hohe stoffliche Verwertungsquote mit nahezu keinen deponiepflichtigen Restmengen realisierbar ist und mittels derer das Prinzip der vollständigen Abfallvermeidung fast vollständig umsetzbar ist.

Erfindungsgemäß wird die Aufgabe wie mit den Ansprüchen angegeben gelöst. Das erfindungsgemäße Verfahren zur nahezu vollständigen Verwertung fester Abfälle mit integrierter Variante zur Verwertung und/oder
Beseitigung flüssiger Abfälle besteht aus vier modularen Verfahrensabschnitten, welche kapazitätsabhängig modular und/oder auch an unterschiedlichen Standorten realisierbar sind.

In einem ersten Verfahrensabschnitt werden zunächst die visuell und manuell erfassbaren Bestandteile nach den Werkstoffgruppen Metall, Glas, Kunststoff, Papier, Pappe, Karton und/oder Verbundwerkstoffe aus Gemischen dieser und anderer Werkstoffe selektiert.
Dazu wird der zu behandelnde Stoffstrom von einer Aufgabeeinheit an eine Trockentrommel übergeben. Diese Trockentrommel ist als Drehrohr mit verfahrensspezifischer Innengestaltung zum Transport des Abfallmaterials in Längsrichtung desselben gestaltet. Im Gegenstrom zum Materialfluss wird in die Trockentrommel Warmluft eingeblasen, welche dem Material Wasser und Feuchtigkeit entzieht. Die mit Wasserdampf und anderen leichtflüchtigen Stoffen beladene Abluft wird einem Biofilter (als Nebenanlage) zugeleitet und dort gereinigt. Das getrocknete Material gelangt sodann über eine Rutsche in ein anschließendes Trommelsieb. Dieses ist als eine definiert perforierte drehbare innere Trommel, angeordnet in einer festen äußeren geschlossenen Trommel, in welche die ausgesiebte Feinfraktion hineinfällt und in Trommellängsrichtung aus dieser ausgetragen wird. Die getrocknete und damit auch weitgehend desodorierte, von Kleinteilen und mineralischem Schmutz, wie Erde und Sand, befreite Grobfraktion wird sodann auf ein Sortierband überführt, wobei die Sortierung manuell und/oder mittels automatischer Systeme erfolgt. Die so im ersten Verfahrensschritt aufbereiteten verschiedenen Werkstoffgruppen werden in getrennten flurgleichen Sammelsystemen erfasst und entweder als Schüttgut oder in gepresster Form traditionellen Verwertungen zugeführt.

In einem zweiten Verfahrensabschnitt wird nicht aussortiertes Material vorzerkleinert und weitgehendst von metallischen Bestandteilen getrennt. Eisenmetalle und Nichteisenmetalle werden getrennt voneinander aus dem weiteren Verfahrensablauf ausgeschleust und der üblichen Verwertung zugeführt. Sodann werden dem Material in einem weiteren Trockner Restfeuchte entzogen, wozu das Abgas aus dem 4. Verfahrensabschnitt verwendet wird, und die Abluft über einem im ersten Verfahrensabschnitt genannten Biofilter geleitet .

Das getrocknete Material wird dann wiederum einer Siebtrommel zugeführt, welche in dieser zweiten Siebstufe eine gegenüber der ersten Siebstufe auf etwa 50% reduzierte Maschenweite aufweist. Die Feinfraktion gelangt sodann in eine Floatation.
Diese Floatation besteht aus einer Wanne mit schrägem Boden. Im Boden derselben befinden sich Druckluftdüsen mit definierter Sprühcharakteristik zur Verwirbelung des zu floatierenden Materials. Über dem Boden steht das Floatationsgemisch bis zur Oberkante einer gegenüber dem Materialeintrag befindlichen Auffangrinne. An dieser Stelle der Wanne, an welcher der Boden am höchsten ist, erfolgt auch der Materialeintrag. Infolge der Bodenschräge, von eingedüster Druckluft und von am Aufgabeende zugeführten Floatationswasser bildet sich ein Materialfluss zum unteren Ende des Bodens. Hier sammelt sich in einer Rinne sandig-kiesiges Material, das heraus befördert wird und als Baustoff Verwendung finden kann. Das ausfloatierte organische Material sammelt sich in der Auffangrinne, von wo es ausgetragen und zur Kompaktierung und Homogenisierung einer Brikettierung zugeführt wird. Das überlaufende Floatationswasser und das Abtropfwasser aus der Materialförderung gelangen in einen zentralen Wasserkreislauf mit Wasseraufbereitung (als Nebenanlage). Das verbleibende vorzerkleinerte und von der mineralischen Fraktion befreite Materialgemisch wird nun in einer weiteren Zerkleinerungsstufe weiter nachzerkleinert und es werden weitere metallische Bestandteile abgeschieden, in dessen Ergebnis ein verfahrensspezifisch definiert zerkleinertes Material entsteht, das für die weiteren Verfahrensschritte erforderlich und besonders geeignet ist und das fast ausschließlich aus organischen Stoffen besteht.

Dieses Material wird nun gemeinsam mit dem aus der Floatation kommenden der Kompaktier- und Homogenisiereinheit zum Zwecke der Brikettierung zugeführt, wobei über eine Bandwaage die Durchlaufmenge und der Feuchtegehalt des Materials gemessen wird. Durch Zudosierung von wasserhaltigen Materialien, wie Klärschlamm und/oder anderen Schlämmen, welche über einen Prozessrechner gesteuert wird, erfolgt die Einstellung des Materials auf die verfahrensspezifisch erforderliche Feuchte.
Bei der Brikettierung erwärmt sich das Material (Kompaktiergut) auf etwa 150°C. Damit wird das Material hygenisiert, homogenisiert und in sich verfestigt. Die Briketts sind witterungsgeschützt sehr lange lagerfähig.

In einem dritten Verfahrensabschnitt wird das so aus Abfällen aufbereitete Material in Form von Briketts in ein motorisch nutzbares teerfreies Gas umgesetzt, das sowohl für den Betrieb von Blockheizkraftwerken und /oder auch für Brennstoffzellen zum Beispiel in MCFC's geeignet ist. Als Vergasungsreaktor ist ein Festbettschachtvergaser geeignet, bei dem die Vergasung nach einem Mehrzonenverfahren mit einer Kombination aus absteigender und aufsteigender Vergasung und/oder aus zwei absteigenden Vergasungen mit geringem Unterdruck von ca. 100 bis 300 mm WS erfolgt. Mittels einer Zellradschleuse gelangen die Briketts in den Reaktor. Über Öffnungen im oberen Reaktorbereich und Rohrleitungen mit Verteilereinrichtungen an deren unteren Ende, die weit bis ins Reaktorinnere und in das Zentrum der Vergasungszone führen, wird der erforderliche Prozesssauerstoff zugeführt, der verfahrensspezifisch ein Gemisch aus Luft und/oder Sauerstoff und/oder Wasserdampf ist. Der Wasserdampf wird im inneren Mantel um den Reaktorkern erzeugt, indem in den Mantel von außen Wasser eingeleitet wird, dass bei etwa 500°C spontan zu überhitztem Dampf verdampft, der dann über Rohre direkt in den unteren Teil der Vergasungszone gelangt, wodurch eine weitgehend gleichmäßige Temperaturverteilung in der Vergasungszone erreicht wird . Über mehrere Luftdüsen im unteren Bereich des Vergaserkerns wird hier Luft eingeleitet, um auch den unteren Teil des Koksbettes durch Oxydation und/oder Vergasung abzuschmelzen. Der Boden des Vergasers ist kegelförmig ausgebildet, wobei die Kegelspitze nach oben gerichtet ist und das untere Ende durch ein bewegliches Rost für den Ascheaustrag abgeschlossen ist. Das Reaktorgas wird über ein Rohr unterhalb des Reaktorkerns seitlich aus dem Reaktor hinaus abgeleitet, nachdem es das Koksbett passiert hat. Das Gas wird sodann schnell gekühlt, intensiv gewaschen und getrocknet, womit es den Anforderungen der Gasverwertung entspricht. Die Abwärme aus der Gaskühlung wird über Wärmetauscher zur Erzeugung von Wärmeenergie genutzt. Das Kühl-, Trocknungs-, Floatations- und Waschwasser aus dem Prozess wird aufbereitet und wiederverwendet, wobei die ausgewaschenen Schmutzstoffe abgetrennt und dem Vergasungsgut vor der Brikettierung wieder zugesetzt werden. Die Steuerung von Luft- und Dampfmengen sowie des Inputs erfolgt mittels Messfühlern, die im Vergaser an definierten Stellen angeordnet sind und verschiedene Parameter, wie Druck, Temperatur, Massenströme, Füllstände und chemische Zusammensetzung des erzeugten Gases messen.

In einem vierten Verfahrensabschnitt kann das so erzeugte Gas durch direkte Verbrennung zur Wärmeerzeugung genutzt werden und/oder durch Betrieb eines Gasmotors mit Generator zur Elektroenergieerzeugung und Abwärmenutzung aus der Gasaufbereitung, der Motorkühlung und dem Motorabgas und/oder zur Elektroenergieerzeugung durch Oxidation der oxidierbaren Bestandteile des Gases in einem katalytischen Prozess mittels Brennstoffzelle,
wie zum Beispiel MCFC und der Abwärmenutzung aus der Abluft der Brennstoffzelle über Wärmetauscher.

Zur Durchführung und zur Optimierung des Verfahrens wird das dafür erforderliche Wasch- und Floatationswasser sowie das entstehende Trocknungswasser im Kreislauf geführt und mittels einer Wasseraufbereitungsanlage zur Wiederverwendung aufbereitet.

Die Wasseraufbereitungsanlage weist mehrere unterschiedliche Kammern auf, wie zunächst eine Einlaufkammer mit Messstation für die Erfassung von verfahrensspezifischen Parametern und eine dieser nachgeordnete Absetzkammer für sedimentierende Stoffe und einem weiter nachgeordnetem Leichtstoffabscheider mit einem Einlauf über einen oberen Rohrstutzen, an welchem ein Koaleszenzabscheider befindlich ist, wobei dieser aus einem Rohr mit darin befindlichem Drahtgestrick besteht, an dessen relativ großer Oberfläche sich die im Abwasser enthaltenen kleinen dispergierten Leichtstofftröpfchen ansetzen und sich zu größeren Tropfen vereinigen, die sich dann infolge ihres Auftriebes abtrennen und aufsteigen und mittels Reihenschaltung solcher Leichtstoffabscheider sich die Konzentration von Leichtstoffen auf weniger als 5,0 mg/l reduzieren lässt und einer Misch- und Dosierkammer mit Rührwerk zur Fällung von Schwebstoffen und gelösten Stoffen mittels Fällungs- und Flockungsmitteln.

Darüber hinaus wird auch die Abluft mittels Biofilter von Staub sowie von flüchtigen organischen und anorganischen Stoffen gereinigt, indem der Staub mechanisch oder elektrostatisch gefiltert wird und organische und anorganische Stoffe biologisch mittels Mikroben verstoffwechselt werden, wobei die Mikroben in einer Dispersion auf ein strukturbildendes Trägermaterial wie Getreidestroh oder getrocknetes Heidekraut aufgebracht werden und bei einem Feuchtigkeitsmangel im Biofilter mittels Sprühdüsen Wasser und/oder Nährstofflösungen in den Biofilter eingebracht werden.

Die Vorzüge des erfindungsgemäßen Verfahrens und dessen Realisierung mittels der erfindungsgemäßen Vorrichtung bestehen nicht nur in der sehr hohen, nahezu vollständigen Abfallverwertung und geringen Emissionen, sondern vielmehr auch in der sicheren Zerstörung von Ultratoxinen und anderen halogenierten Organika, was sonst nur sehr aufwändig mittels einer Hochtemperaturverbrennungsanlage möglich ist.

Durch die Verwertung von Abwärme aus dem Vergasungsprozess und/oder dem Energieerzeugungsprozess für die Trocknungsprozessstufe ist auch keine Primärenergie zur Durchführung des Verfahrens erforderlich.
Die Modulbauweise der Vorrichtungen zur Durchführung des Verfahrens erlaubt auch die Installation derselben an verschiedenen territorial getrennten Standorten.
Das erfindungsgemäße Verfahren ist auch schon mit einer relativ geringen Inputmenge von ca. 40 000 t/a ökonomisch betreibbar.

Nachstehend wird die Erfindung an einem Ausführungsbeispiel näher erläutert.

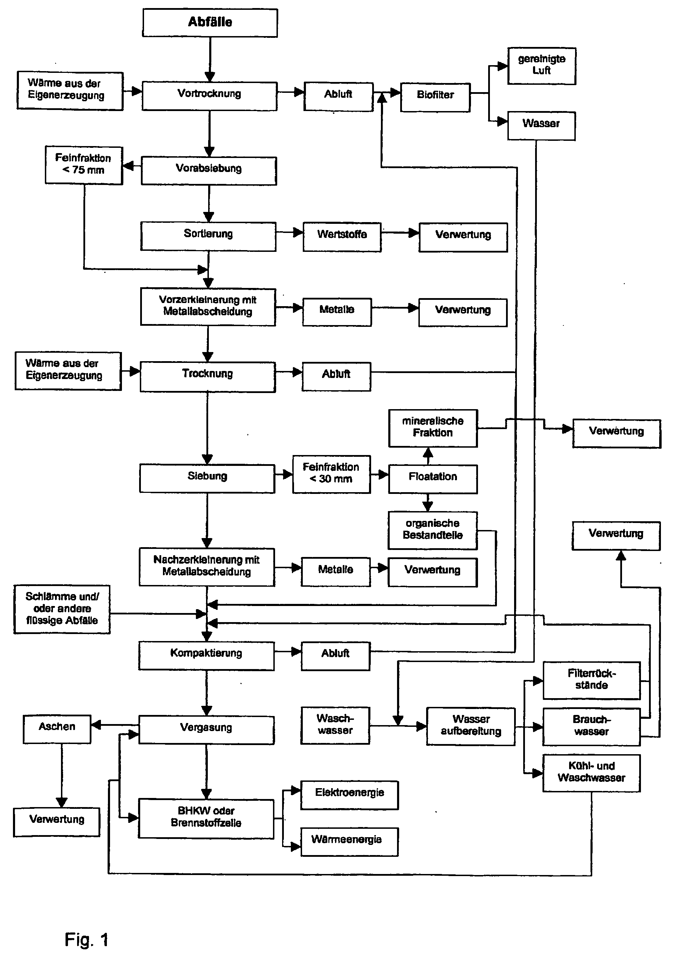

In den zugehörigen Zeichnungen sind mit
- Fig.1: ein Blockschaltbild des Verfahrens und mit

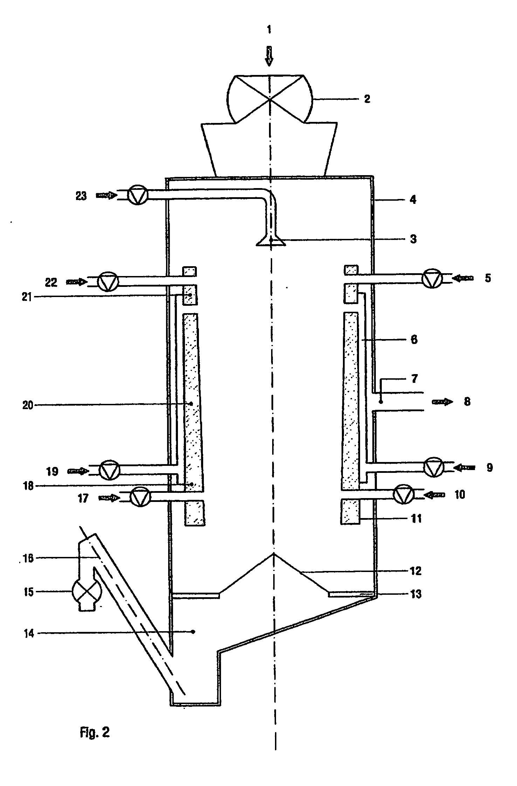

- Fig.2: ein Vergasungsreaktor im Querschnitt und mit

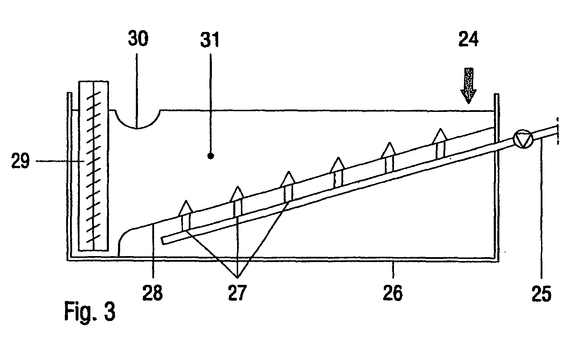

- Fig.3: eine Floatationsanlage im Querschnitt und mit

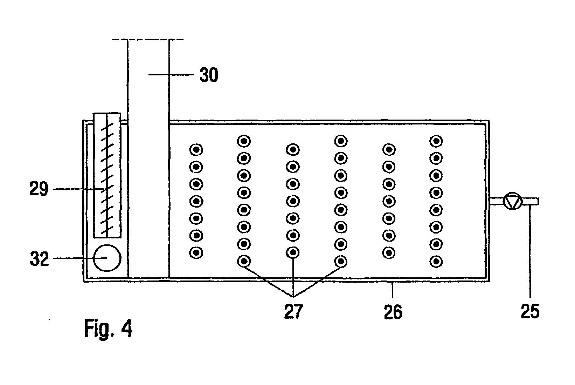

- Fig.4: die Floatationsanlage in der Draufsicht und mit

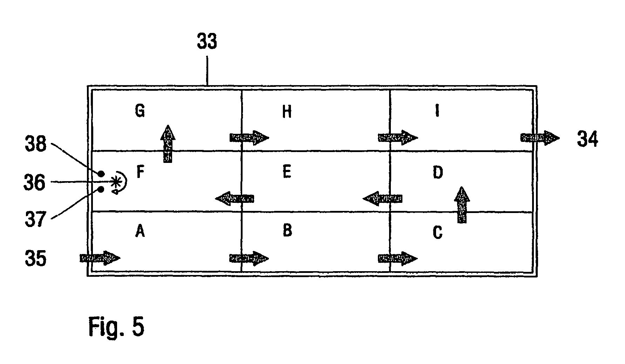

- Fig.5: eine Wasseraufbereitungsanlage in der Draufsicht und mit

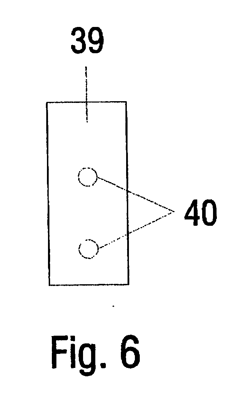

- Fig.6: eine Trennwand der Wasseraufbereitungsanlage mit Überlauföffnungen und mit

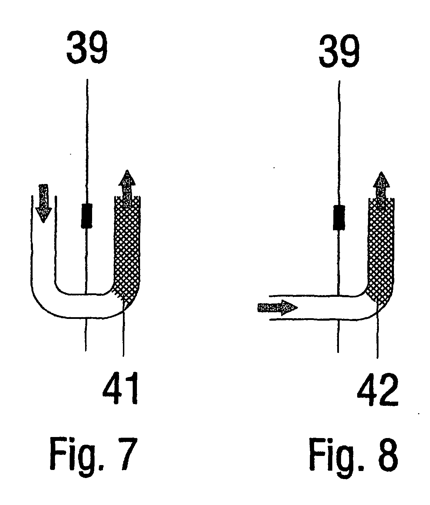

- Fig.7: die Ausgestaltung der Überläufe mit Drahtgestrick und mit
- Fig.8: eine andere Variante der Überläufe und mit

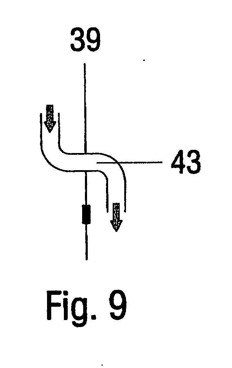

- Fig.9: eine weitere Variante der Überlaufgestaltung schematisch dargestellt.

Die Vorrichtungen zur Durchführung des Verfahrens bestehen im wesentlichen aus den modularen Hauptbaugruppen Aufgabevorrichtung, Vorrichtung zur Vortrocknung, Vorrichtung zur Vorabsiebung, Vorrichtung für die Metallabscheidung, Sortiervorrichtung, Sammelsystem-Lagerbehälter, Vorzerkleinerer mit Vorrichtung zur Metallabscheidung, Trocknungsvorrichtung, Siebvorrichtung, Nachzerkleinerer mit Vorrichtung zur Metallabscheidung, Floatationsvorrichtung, Brikettiervorrichtung, Biofilter, Vorrichtung zur Wasseraufbereitung, Fördereinrichtungen, Vergasungsreaktor, Brennkraftmaschine mit Elektrogenerator, Brenner zur direkten Wärmeerzeugung oder Brennstoffzelle für Gasoxidation.
Über die Aufgabeeinheit wird der zu behandelnde Stoffstrom in die Vorrichtung zur Vortrocknung transportiert .
Diese Vorrichtung ist als Drehrohr mit verfahrensspezifischer Innengestaltung zum Transport des Abfallmaterials in Längsrichtung desselben gestaltet. Sie ist mit einem Warmluftein- und auslass versehen. Die mit Wasserdampf und anderen leichtflüchtigen Stoffen beladene Abluft wird dem Biofilter (als Nebenanlage) zugeleitet und dort gereinigt. Dieser Biofilter enthält mechanische und elektrostatische Filterelemente sowie Mikrobenkulturen und Sprühdüsen für Wasser und/oder Nährstofflösungen zum Eintrag in den Biofilter.
Die Vorrichtung zur Vortrocknung ist über eine Rutsche mit einer anschließenden Vorrichtung zur Vorabsiebung gekoppelt. Diese ist als eine definiert perforierte drehbare innere Trommel, angeordnet in einer festen äußeren geschlossenen Trommel, ausgebildet.

Daran anschließend ist eine Sortiervorrichtung mit Sortierband sowie mehreren flurgleichen Lagerbehältern eines Sammelsystems angeordnet.

In der Sortiervorrichtung werden mittels Förderband zunächst die visuell und manuell erfassbaren Bestandteile nach den Werkstoffgruppen Metall, Glas, Kunststoff, Papier, Pappe, Karton und/oder Verbundwerkstoffe aus Gemischen dieser und anderer Werkstoffe selektiert.

Dieser schließt sich die Vorrichtung zur Vorzerkleinerung nicht aussortierten Materials und eine Vorrichtung zur Aussonderung von metallischen Bestandteilen an. Sodann schließt sich eine zweite Trocknungsvorrichtung mit Biofilter an , die wie die erste Trocknungsstufe gestaltet ist. Über eine Rutsche wird das getrocknete Material der zweiten Siebvorrichtung zugeführt, die wie die erste Siebstufe ausgebildet ist, dessen Sieb aber gegenüber der ersten Siebstufe, eine etwa auf 50% reduzierte Maschenweite aufweist. Die Siebvorrichtung ist über je ein Transportband für die Feinfraktion bzw. das Siebgut einerseits mit der Floatationsanlage und andererseits mit der Kompaktiervorrichtung gekoppelt.

Die Floatationsvorrichtung besteht aus einer Floatationswanne 26 mit schrägem Boden 28. Im Boden 28 derselben befinden sich Druckluftdüsen 27 mit definierter Sprühcharakteristik zur Verwirbelung des zu floatierenden Materials. Gegenüber der Materialaufgabe 24 befindet sich die Sammelrinne 30 sowie die Förderschnecken 29 und 32 für den Bodensatz.
An die Sammelrinne 30 schließt sich über eine Bandwaage und einen Feuchtesensor die Kompaktier- und Homogenisiereinheit zur Brikettierung an. Bandwaage und Feuchtesensor sind über einen Prozessrechner mit einer Dosiervorrichtung für die Zudosierung von Flüssigkeiten und/oder Schlämmen gekoppelt.

Der Brikettiervorrichtung schließt sich über eine Fördereinrichtung der Vergasungsreaktor an, welcher ein Festbettschachtvergaser ist. Dieser weist eine Zellradschleuse 2 für die Briketts auf. Im oberen Reaktorbereich sind Rohrleitungen 5, 22, 23 und Rohrleitungen mit Verteilereinrichtungen für Luft und Wasserdampf befindlich, die weit bis ins Reaktorinnere führen. Der Reaktorkern ist mit Keramik 11 ausgemauert und so ummantelt, dass sich ein wasserdichter Ringspalt 6 ausbildet und welcher mit dem Wassereinlass 9 verbunden ist.

Im unteren Bereich des Vergaserkerns befinden sich mehrere Lufteinlässe 10, 17. Der Boden 12 des Vergasungsreaktors ist kegelförmig ausgebildet, wobei die Kegelspitze nach oben gerichtet ist und das untere Ende durch ein bewegliches Rost 13 für den Ascheaustrag mittels der Schleuse 15 abgeschlossen ist. Das Reaktorgas wird über ein Rohr 8 unterhalb des Reaktorkerns seitlich aus dem Reaktor heraus in die Gaskühlung,- wäsche- und - trocknung abgeleitet. Diese sind über ein Rohrsystem für das Kühl- und Waschwasser mit der Wasseraufbereitungsanlage verbunden. Zur Steuerung von Luft- und Dampfmengen sowie des Inputs 1 sind Messfühler 3, 7, 14, 18, 20, 21 für verschiedene Parameter, wie Druck, Temperatur, Massenströme, Füllstände und chemische Zusammensetzung des erzeugten Gases im Vergasungsreaktor angeordnet.

In dem ersten Verfahrensabschnitt werden zunächst die visuell und manuell erfassbaren Bestandteile nach Werkstoffgruppen, wie Metall, Glas, Kunststoff, Papier, Pappe, Karton und/oder Verbundwerkstoffe aus Gemischen dieser und anderer Werkstoffe in an sich bekannter Weise selektiert. Dazu wird der zu behandelnde Stoffstrom von Abfällen über eine Aufgabevorrichtung in eine Vorrichtung zur Vortrocknung eingetragen.
Diese Vorrichtung ist als Drehrohr mit verfahrensspezifischer Innengestaltung zum Transport des Abfallmaterials in Längsrichtung desselben gestaltet. Im Gegenstrom zum Materialfluss wird in die Trockentrommel Warmluft eingeblasen, welche dem Material Wasser, Feuchtigkeit und andere flüchtige Stoffe entzieht. Die mit Wasserdampf und anderen leichtflüchtigen Stoffen beladene Abluft wird einem Biofilter (als Nebenanlage) zugeleitet und dort gereinigt. Das getrocknete Material gelangt sodann über eine Rutsche in eine anschließende Vorrichtung zur Vorabsiebung. Diese ist als eine definiert perforierte drehbare innere Trommel, angeordnet in einem festen äußeren geschlossenen Gehäuse, in welche die ausgesiebte Feinfraktion hineinfällt und in Trommellängsrichtung aus diesem ausgetragen wird. Die getrocknete und damit auch weitgehend desodorierte, von Kleinteilen und mineralischem Schmutz, wie Erde und Sand, befreite Grobfraktion wird sodann auf ein Sortierband überführt, wobei vorab über eine Vorrichtung zur Metallabscheidung Eisen und Nichteisenmetalle abgetrennt werden und die Sortierung manuell erfolgt.

Die so im ersten Verfahrensschritt aufbereiteten verschiedenen Werkstoffgruppen werden in getrennten flurgleichen Sammelsystemen erfasst und entweder als Schüttgut oder in gepresster Form traditionellen Verwertungen zugeführt.

In dem zweiten Verfahrensabschnitt wird nicht aussortiertes Material auf eine Korngröße von etwa 150 mm bis 250 mm vorzerkleinert und weitgehendst von metallischen Bestandteilen getrennt.
Eisenmetalle und Nichteisenmetalle werden getrennt voneinander aus dem weiteren Verfahrensablauf ausgeschleust und der üblichen Verwertung zugeführt. Sodann werden dem Material in einer weiteren Trocknungsvorrichtung Restfeuchte entzogen, wozu das Abgas aus dem 4. Verfahrensabschnitt verwendet wird, und die Abluft über einem im ersten Verfahrensabschnitt genannten Biofilter geleitet wird.

Das getrocknete Material wird dann wiederum einer weiteren Siebvorrichtung zugeführt, welche in dieser zweiten Siebstufe eine gegenüber der ersten Siebstufe eine etwa auf 50% reduzierte Maschenweite aufweist. Anschließend erfolgt über eine weitere Vorrichtung zur Metallabscheidung die Abtrennung von verbliebenen Eisen- und Nichteisenmetallen.

Die Feinfraktion gelangt sodann in eine Floatationsvorrichtung. An der Stelle der Floatationswanne 26, an welcher deren abgeschrägter Boden 28 am höchsten ist, erfolgt der Materialeintrag. Infolge der Bodenschräge 28, von eingedüster Druckluft am Drucklufteinlass 25 und von am Aufgabeende zugeführtem Floatationswassergemisch 31 bildet sich ein Materialfluss zum unteren Ende des Bodens 28. Hier sammelt sich in einer Rinne sandig- kiesiges Material, das mittels Fördererschnecke 29 heraus befördert wird und als Baustoff Verwendung finden kann. Das ausfloatierte organische Material sammelt sich in der Sammelrinne 30, von wo es ausgetragen und der Brikettiereinrichtung zur Kompaktierung und Homogenisierung zugeführt wird. Das überlaufende Floatationswasser und das Abtropfwasser aus der Materialförderung gelangen in einen zentralen Wasserkreislauf mit Wasseraufbereitung (als Nebenanlage). Das verbleibende vorzerkleinerte und von der mineralischen Fraktion befreite Materialgemisch wird nun in einer weiteren Zerkleinerungsstufe weiter nachzerkleinert und es werden weiter metallische Bestandteile abgeschieden, in dessen Ergebnis ein verfahrensspezifisch definiert zerkleinertes Material entsteht, das für die weiteren Verfahrensschritte erforderlich und besonders geeignet ist und das fast ausschließlich aus organischen Stoffen besteht.

Dieses Material wird nun gemeinsam mit dem organischen Material aus der Floatationsvorrichtung der Kompaktier- und Homogenisiereinrichtung zum Zwecke der Brikettierung zugeführt, wobei über eine Bandwaage die Durchlaufmenge und über einen Feuchtesensor der Feuchtegehalt des Materials gemessen werden. Durch Zudosierung von wasserhaltigen Materialien, wie Klärschlamm und/oder anderen Schlämmen welche über einen Prozessrechner gesteuert wird, erfolgt die Einstellung des Materials auf die verfahrensspezifisch erforderliche Feuchte.
Bei der Brikettierung erwärmt sich das Material (Kompaktiergut) auf etwa 150°C.

Damit wird das Material hygenisiert, homogenisiert und in sich verfestigt.

Im dritten Verfahrensabschnitt wird das so aus Abfällen aufbereitete Material in Form von Briketts in ein motorisch nutzbares teerfreies Gas umgesetzt, das sowohl für den Betrieb von Blockheizkraftwerken und/oder auch für Brennstoffzellen wie z. B. MCFC's geeignet ist. Als Vergasungsreaktor ist ein Festbettschachtvergaser geeignet, bei dem die Vergasung nach einem Mehrzonenverfahren mit einer Kombination aus absteigender und aufsteigender Vergasung und/oder aus zwei absteigenden Vergasungen mit geringem Unterdruck von ca. 100 bis 300 mm WS erfolgt. Mittels der Zellradschleuse 2 gelangen die Briketts in den Reaktor. Über Luft- und Dampföffnungen 5, 22, 23 im oberen Reaktorbereich und Rohrleitungen mit Verteilereinrichtungen an deren unteren Ende, die bis ins Reaktorinnere und damit in das Zentrum der Vergasungszone führen, wird der erforderliche Prozesssauerstoff zugeführt, der verfahrensspezifisch ein Gemisch aus Luft und/oder Sauerstoff und/oder Wasserdampf ist. Der Wasserdampf wird im Ringspalt 6 des inneren Mantels um den Reaktorkern herum erzeugt, indem in den Ringspalt 6 von außen durch die Wassereinlässe 9, 19 Wasser eingeleitet wird, dass bei etwa 500° C spontan zu überhitztem Dampf verdampft, der dann direkt in den unteren Teil der Vergasungszone gelangt, wodurch eine weitgehend gleichmäßige Temperaturverteilung in der gesamten Vergasungszone erreicht wird. Über mehrere Lufteinlässe 10, 17 im unteren Bereich des Vergasungsreaktorkerns wird hier Luft eingeleitet, um auch den unteren Teil des Koksbettes durch Oxydation und/oder Vergasung abzuschmelzen. Der Boden 12 des Vergasungsreaktors ist kegelförmig ausgebildet, wobei die Kegelspitze noch oben gerichtet ist und das untere Ende durch ein bewegliches Rost 13 für den Ascheaustrag 16 durch die Schleuse 15 abgeschlossen ist. Das Reaktorgas wird über ein Rohr 8 unterhalb des Reaktorkern seitlich aus dem Reaktor hinaus abgeleitet, nachdem es das Koksbett passiert hat. Das Gas wird sodann schnell gekühlt, intensiv gewaschen und getrocknet, womit es den Anforderungen der Gasverwertung entspricht. Das Kühl- und Waschwasser aus dem Prozess wird aufbereitet und wieder verwendet, wobei die ausgewaschenen Schmutzstoffe abgetrennt und dem Vergasungsgut vor der Brikettierung wieder zugesetzt werden. Die Steuerung von Luft- und Dampfmengen sowie des Inputs 1 erfolgt mittels Messfühlern 3, 7, 14, 18, 20, 21, die im Vergasungsreaktor an definierten Stellen angeordnet sind und verschiedene Parameter, wie Druck, Temperatur, Massenströme, Füllstände und chemische Zusammensetzung des erzeugten Gases messen.
In dem vierten Verfahrensabschnitt kann das so erzeugte Gas durch direkte Verbrennung zur Wärmeerzeugung genutzt werden und/oder durch Betrieb eines Gasmotors mit Generator zur Stromerzeugung und die Abwärmenutzung aus der Gasaufbereitung, der Motorkühlung und des Motorabgases über Wärmetauscher zur Erzeugung von Wärmeenergie und/oder zur Elektroenergieerzeugung durch Oxidation der oxidierbaren Bestandteile des Gases in einem katalytischen Prozess mittels Brennstoffzelle, wie z.B. MCFC und der Abwärmenutzung aus der Abluft der Brennstoffzelle über Wärmetauscher. Zur Optimierung des Verfahrens wird das dafür erforderliche Wasch-, Kühl und Floatationswasser sowie das entstehende Trocknungswasser im Kreislauf geführt und mittels einer Wasseraufbereitungsanlage zur Wiederverwendung aufbereitet.
Die Wasseraufbereitungsanlage bestehend aus dem Behälter 33 mit Zulauf 35 und Auslauf 34 weist mehrere unterschiedliche durch Trennwände 39 mit Überläufen 40, 43 abgeteilte Kammern A bis I auf, wie zunächst die Einlaufkammer A mit Messfühler 37, 38 für die Erfassung von verfahrensspezifischen Parametern und mehrere dieser nachgeordneten Absetzkammern für sedimentierende Stoffe und einem weiter nachgeordnetem Leichtstoffabscheider 41, 42 mit einem Einlauf über einen oberen Rohrstutzen, an welchem ein Koaleszenzabscheider befindlich ist, wobei dieser aus einem Rohr mit darin befindlichem Drahtgestrick besteht, an dessen relativ großer Oberfläche sich die im Abwasser enthaltenen kleinen dispergierten Leichtstofftröpfchen ansetzen und sich zu größeren Tropfen vereinigen, die sich dann infolge ihres Auftriebes abtrennen und aufsteigen und mittels Reihenschaltung dieser Leichtstoffabscheider die Konzentration der Leichtstoffe auf weniger als 5,0 mg/ l reduzieren. Eine der Kammern ist dabei als Misch- und Dosierkammer mit Rührwerk 36 zur Fällung von Schwebstoffen und gelösten Stoffen mittels Fällungs- und Flockungsmitteln gestaltet. Die Abluft von den Trocknern und den Siebtrocknern wird mittels nachgeschaltetem Biofilter von Staub sowie von flüchtigen organischen und anorganischen Stoffen gereinigt, indem der Staub mittels der biologischen Struktur mechanisch heraus gefiltert wird und organische und anorganische Stoffe biologisch mittels Mikroben verstoffwechselt werden, wobei die Mikroben in einer Dispersion auf ein strukturbildendes Trägermaterial wie Getreidestroh oder getrocknetes Heidekraut aufgebracht werden und bei einem Feuchtigkeitsmangel im Biofilter mittels Sprühdüsen, Wasser und/oder Nährstofflösungen in den Biofilter eingebracht werden.

### Aufstellung der verwendeten Bezugszeichen

- 1: Input (Brikett)
- 2: Zellradschleuse
- 3: Messfühler
- 4: Vergasungsreaktor
- 5: Luft- und Dampfeinlassrohrleitungen
- 6: Ringspalt
- 7: Messfühler
- 8: Gas Auslassrohr
- 9: Wassereinlass
- 10: Lufteinlass
- 11: Keramik Ausmauerung
- 12: Boden
- 13: Rost
- 14: Messfühler
- 15: Schleuse
- 16: Ascheaustrag
- 17: Lufteinlass
- 18: Messfühler
- 19: Wassereinlass
- 20: Messfühler
- 21: Messfühler
- 22: Luft- und Dampfeinlassrohrleitung
- 23: Luft- und Dampfeinlassrohrleitung
- 24: Materialaufgabe
- 25: Drucklufteinlass
- 26: Floatationswanne
- 27: Druckluftdüsen
- 28: Bodenschräge
- 29: Förderschnecke
- 30: Sammelrinne
- 31: Flotationswassergemisch
- 32: Förderschnecke
- 33: Behälter
- 34: Auslauf
- 35: Zulauf
- 36: Rührwerk
- 37: Messfühler
- 38: Messfühler
- 39: Trennwände
- 40: Überlauf
- 41: Leichtstoffabscheider
- 42: Leichtstoffabscheider
- 43: Überlauf
- A bis I: Kammern der Wasseraufbereitung

## Patentansprüche

1. Verfahren zur Aufbereitung und zur Verwertung von festen und/oder von flüssigen Abfallstoffen und/oder deren Gemische, insbesondere zur hochwertigen energetischen Verwertung deren organischer Stoffbestandteile, wobei in einem
- ersten Verfahrensabschnitt aus einem Abfallstoffgemisch die visuell und manuell erfassbaren Bestandteile nach den Werkstoffgruppen Metalle, Glas, Kunststoffe, Papier, Compounds, Verbundwerkstoffe und anderes aussortiert und von einander getrennt werden, indem der zu behandelnde Stoffstrom zunächst vorgetrocknet und die mit Wasserdampf und anderen leichtflüchtigen Stoffen beladene Abluft gereinigt wird und sodann das trockene, weitgehendst desodorierte Material in einer ersten Siebung von mineralischen Schmutz, wie Sand, Erde und Kleinteilen getrennt wird und sodann Eisen- und Nichteisenmetalle abgeschieden werden und manuell oder automatisch sortiert und die aussortierten Werkstoffe nach Werkstoffgruppen getrennt gelagert und der traditionellen Verwertung zugeführt werden und in einem
- zweiten Verfahrensschritt das nicht aussortierte verbleibende Material auf eine Korngröße von etwa 150 mm bis 250 mm vorzerkleinert wird und daraus nochmals metallische Bestandteile, getrennt nach Eisen- und Nichteisenmetallen, ausgesondert werden und sodann
- dem Material weitere Restfeuchte durch eine zweite Trocknung entzogen wird und sodann
- das Material in einer zweiten Siebstufe mit etwa 50% geringerer Maschenweite als die der ersten Siebstufe gesiebt wird und sodann das ausgesiebte Siebgut floatiert wird und sodann
- das dadurch von der mineralischen Fraktion befreite Material weiter kompaktiert wird und parallel dazu die Siebreste nachzerkleinert und nochmals daraus metallische Bestandteile ausgesondert werden und das nachzerkleinerte Material mit dem floatiertem Material zusammengeführt wird, so dass ein Material aus fast ausschließlich organischen Stoffen verbleibt und
- das so aus der Nachzerkleinerung und der Floatation erhaltene organische Material auf einen verfahrensspezifisch definierten Feuchtegehalt gebracht wird, indem Flüssigkeit, wie Klärschlamm oder anderen Schlämmen definiert zu dosiert wird und so zu Briketts verpresst wird, dass dabei eine Eigenerwärmung des Stoffgemisches auf mehr als 150° C erfolgt und wobei in einem
- dritten Verfahrensabschnitt aus den so erhaltenen Briketts bei einer Vergasungstemperatur von etwa 300° C bis 450° C und einer Gasführung über ein glühendes Koksbett mit einer Temperatur von etwa 1000° C bis 1400° C ein energetisch nutzbares teerfreies Gas erzeugt wird, indem dem Vergasungsprozess zunächst die Briketts sowie Luftsauerstoff und/oder Wasserdampf zugeführt wird, wobei der Wasserdampf in einem Ringspalt(6) zwischen inneren und äußeren Vergasungsreaktormantel erzeugt und im oberen und im unteren Vergasungsreaktorbereich sowie im Vergasungsreaktor verteilt wird und
- wobei die Bemessung der Wasserdampfmenge in Abhängigkeit von Druck, Temperatur, Massenströme und chemische Zusammensetzung des Gases gesteuert wird und wobei
- das Gas, nach passieren des Koksbetts, aus dem Vergasungsreaktorkern abgeleitet wird und wobei
- das Gas nachfolgend schnell auf 30° C bis 60° C abgekühlt, gewaschen und getrocknet wird und wobei
- in einem vierten Verfahrensabschnitt aus dem Gas direkt Wärmeenergie erzeugt wird und/oder daraus Elektroenergie und aus der Abwärme der Gasaufbereitung Wärmeenergie erzeugt wird und/oder durch Oxydation der im Gas enthaltenen oxydierbaren Bestandteile in einer Brennstoffzelle im katalytischem Prozess elektrische Energie erzeugt wird und die Abwärme der Abluft der Brennstoffzelle als Wärmeenergie genutzt wird und wobei
- in einem Nebenprozess das Kühlwasser, das Trocknungswasser aus Abluft und Brüden und das Waschwasser im Kreislauf aufbereitet wird, wobei die dabei anfallenden Schmutzstoffgemische dem Inputgut als Material wieder vor dessen Verpressung zu Briketts zugesetzt werden und wobei die Abluft gereinigt wird.

2. Vorrichtung zur Durchführung des Verfahrens nach Anspruch 1, wobei dieselbe aus den modularen Hauptbaugruppen Aufgabevorrichtung, Vorrichtung zur Vortrocknung, Vorrichtung zur Vorabsiebung, Vorrichtung für die Metallabscheidung, Sortiervorrichtung, Sammelbehältnis- System mit Lagerbehälter, Vorzerkleinerer mit Vorrichtung zur Metallabscheidung, Trocknungsvorrichtung, Siebvorrichtung, Nachzerkleinerer mit Vorrichtung zur Metallabscheidung , Floatationsvorrichtung, Brikettiervorrichtung , Biofilter, Vorrichtung zur Wasseraubereitung, Fördereinrichtungen, Vergasungsreaktor, Brennkraftmaschine, mit Elektrogenerator, Brenner zur direkten Wärmeerzeugung oder Brennstoffzelle für Gasoxidation besteht, wobei
- die Sortiervorrichtung eine Bandsortieranlage mit vorgeordneter erster Trocknungseinrichtung , erster Siebvorrichtung und Vorrichtung zur Metallabscheidung ist und die manuell oder automatisch betreibbar ist und der Sammel- und Lagerbehältnisse für Werkstoffgruppen, wie Metall, Glas, Kunststoff, Papier, Pappe, Karton und/oder Verbundwerkstoffen zugeordnet sind und wobei
- ein Biofilter dem Abluftauslass nachgeschaltet ist welcher mechanische und elektrostatische Filterelemente sowie Mikrobenkulturen und Sprühdüsen für Wasser und/oder Nährstofflösungen zum Eintrag in den Biofilter enthält und wobei
- sich diesem eine Zerkleinerungsvorrichtung zur Vorzerkleinerung nicht aussortierten Materials und eine Vorrichtung zur Aussonderung von metallischen Bestandteilen sowie eine zweite Siebvorrichtung an schließt, dessen Siebstufe gegenüber der ersten Siebstufe eine etwa auf 50% reduzierte Maschenweite aufweist und dessen Siebgutaustrag über ein Transportband mit einer Floatationsvorrichtung gekoppelt ist und dessen Siebresteaustrag über ein Transportband mit einer Nachzerkleinerungsvorrichtung mit Metallabscheidung gekoppelt ist und wobei
- diese Floatationsvorrichtung aus einer Floatationswanne (26) mit schrägem Boden(28) besteht, in dem Druckluftdüsen (27) mit definierter Sprühcharakteristik zur Verwirbelung des zu floatierenden Materials befindlich sind, und bei welcher gegenüber der Materialeintragsstelle die Sammelrinne(30) sowie die Förderschnecken (29 und 32) für den Bodensatz von Mineralien angeordnet sind und wobei
- die organischen Materialien aus der Floatationsvorrichtung und aus der Nachzerkleinerung mittels Transportband über eine Bandwaage und einen Feuchtesensor zu einer Kompaktiervorrichtung und einer Homogenisiereinheit als Brikettiervorrichtung zusammen geführt werden, wobei die Bandwaage und der Feuchtesensor über einen Prozessrechner mit einer Dosiervorrichtung für die Zudosierung von Flüssigkeiten und/oder Schlämmen gekoppelt sind und wobei
- sich der Brikettiervorrichtung, der ein Bunker zur Zwischenlagerung der Briketts nachgeordnet sein kann, über eine Fördereinrichtung dem Vergasungsreaktor anschließt, welcher ein Festbettschachtvergaser ist und der eine Zellradschleuse(2) für die Briketts aufweist und in dessen oberen Reaktorbereich Rohrleitungen(5, 22, 23) und Rohrleitungen mit Verteilereinrichtungen für Luft und/oder Wasserdampf und/oder Gas befindlich sind, die weit bis ins Reaktorinnere führen und wobei
- der Reaktorkern mit Keramik(11) ausgegossen und so ummantelt ist, dass sich ein wasserdichter Ringspalt(6) ausbildet, welcher mit dem Wassereinlass(9) verbunden ist und wobei
- sich im unteren Bereich des Vergaserkerns mehrere Lufteinlässe(10, 17) befinden und der Boden(12) des Vergasungsreaktors kegelförmig ausgebildet ist, wobei die Kegelspitze nach oben gerichtet ist und das untere Ende durch ein bewegliches ringförmiges Rost(13) für den Ascheaustrag mittels der Schleuse(15) abgeschlossen ist und wobei
- ein Rohr(8) unterhalb des Reaktorkerns seitlich desselben angeordnet ist das mit einer Öffnung im Vergaseraußenmantel verbunden ist und diese Öffnung wiederum über eine Rohrleitung mit einem Gaskühler, Gaswäscher und einem Gastrockner verbunden ist und wobei
- zur Steuerung von Luft- und Dampfmengen sowie des Inputs(1) Messfühler(3, 7, 14, 18,20,21) für verschiedene Parameter, wie Druck, Temperatur, Massenströme, Füllstände und chemische Zusammensetzung des erzeugten Gases im Vergasungsreaktor angeordnet sind und wobei
- die Wasseraufbereitungsanlage, bestehend aus dem Behälter(33) mit Zulauf (35) und Auslauf (34), mehrere unterschiedliche durch Trennwände(39) mit Überläufen(40, 43) abgeteilte Kammern (A bis I) aufweist, wie die Einlaufkammer (A) mit Messfühler (37, 38) für die Erfassung von verfahrensspezifischen Parametern und mehrere dieser nachgeordneten Absetzkammern für sedimentierende Stoffe und einem weiter nachgeordnetem Leichtstoffabscheider(41, 42) mit einem Einlauf über einen oberen Rohrstutzen, an welchem ein Koaleszenzabscheider befindlich ist, der aus einem Rohr mit darin befindlichem Drahtgestrick besteht und wobei
- eine der Kammern dabei als Misch- und Dosierkammer mit Rührwerk(36) zur Fällung von Schwebstoffen und gelösten Stoffen mittels Fällungs- und Flockungsmitteln gestaltet ist und wobei
- ein der ersten und der zweiten Trocknungsvorrichtung nachgeschalteter Biofilter mit Filtertüchern und/oder anderen Biostrukturen und/oder Zentrifuge und/oder elektrostatischen Bauelementen ausgestattet ist und dort auch Mikroben zur Verstoffwechselung organischer und anorganischer Stoffe auf einem strukturbildenden Trägermaterial , angesiedelt sind und im Biofilter Sprühdüsen für Wasser und/oder Nährstofflösungen zum Eintrag in den Biofilter angeordnet sind.

## Claims

1. Process for preparation and recycling of solid and/or liquid wastes and/or mixtures thereof, especially for high-efficiency energetic recycling of their organic material constituents, in which
- in a first process stage the visually and manually detectable constituents are separated from a waste mixture and sorted in material groups like metals, glass, plastics, paper, compounds, composite materials and others by initially pre-drying the material flow to be processed and cleaning the waste air laden with water steam and other easily volatile substances such that the material flow dried and largely deodorised in a first screening operation is freed from mineral pollutants, such as sand, earth and small particles, followed by manual or automatic sorting-out of ferrous and non-ferrous metals, separate storage of sorted-out materials according to their material groups and further handling of material for traditional recycling, and in which
- in a second process stage the remaining material not sorted out is pre-crushed to a particle size of some 150 - 250 mm, in which the metallic constituents are once more separated as ferrous and non-ferrous metals, followed by
- a second drying operation in which residual moisture is further eliminated from the material, and
- a second screening stage in which the material is screened with a mesh size some 50% smaller than the mesh size in the first screening stage, followed by floatation of sieved-out screenings, and
- further compaction of material freed from the mineralised fraction and, in parallel to that, secondary crushing of sieved-out remainders, followed by another separation of metallic constituents so that the material obtained by secondary crushing is united with the floating material such that one single material flow remains that is almost completely composed of organic substances, and
- setting the organic material derived from secondary crushing and floatation to a moisture content defined by process-specific aspects by adding a dosed volume of liquid, such as sewage sludge or other sludge, and pressing briquettes so that the substance mixture develops a self-heating temperature of more than 150°C, followed by
- a third process stage in which an energetically usable inert gas is generated from the briquettes formed in this way at a gasification temperature of some 300°C to 450°C by routing the gas over a glowing coke bed with a temperature of some 1000°C to 1400°C, such that in the gasification process the briquettes plus air oxygen and/or water steam are initially fed in, with generation of water steam in an annular gap (6) between internal and external gasification reactor shells and distribution in the upper and lower gasification reactor zone and inside the gasification reactor, and
- in which the measurement of water-steam flow rate is controlled as a function of pressure, temperature, mass flow rate and chemical composition of the gas, and in which
- the gas having passed the coke bed is discharged from the gasification-reactor core; and in which
- the gas is subsequently cooled rapidly to 30°C to 60°C, followed by scrubbing and drying, and in which
- in a fourth process stage heat energy and/or electric power is directly generated from the gas, and/or electric energy is produced through oxidation of oxidizable constituents of gas in a fuel cell in a catalytic process whereas waste heat from waste air of fuel cell is used as heat energy, and in which
- cooling water, drying water from waste air and vapours and washing water are circulating and processed in a secondary process, in which the developing pollutant mixtures are added again as material to the feedstock prior to briquetting, and in which waste air is cleaned.

2. Equipment for implementation of the process described in Claim 1, **characterised by** the fact that the equipment consists of modular main components like feeding device, pre-drying device, pre-screening device, metal separator, sorting device, collection container system with storage container, pre-crusher with metal separator, drying device, screening device, secondary crusher with metal separator, floatation unit, briquetting machine, biofilter, water preparation device, conveyors, gasification reactor, combustion power machine with electric generator, burner for direct heat generation or fuel cell for gas oxidation, in which
- the sorting device is a conveyor-type sorting device with upstream first drying unit, first screening device and manually or automatically operating metal separator with associated collection and storage containers for material groups like metal, glass, plastics, paper, paperboard, cardboard and/or composite materials, and in which
- a biofilter is located on the downstream side of waste-air outlet containing mechanical and electrostatic filter elements plus microbial cultures and spraying nozzles for water and/or nutrient solutions required for loading the biofilter, and in which
- these appliances are followed by a crusher for pre-crushing of material not sorted out, and an appliance for sorting-out metallic constituents plus a second screening device with a mesh size 50% smaller than the mesh size of the previous stage, with a coupled transport conveyor with a floatation device coupled to screening discharge side, and in which its discharge device for screening remainders is coupled through a transport conveyor to the secondary crusher with metal separator, and in which
- this floatation device consists of a floatation trough (26) with inclined bottom (28) and provided with air nozzles (27) with defined spraying characteristic for whirling the material to be floated, and in which the collection channel (30) and the conveying screws (29 and 32) for the bottom sediments of minerals are located opposite to the material feeding point, and in which
- the organic materials from floatation unit and secondary crusher are brought together by the transport conveyor and delivered via the conveyor scale and a moisture sensor to a compactor and brought together in a homogenizer unit as briquetting machine, in which the conveyor scale and the moisture sensor are coupled through a process computer to a dosing feeder for dosed feeding of liquids and/or sludge, and in which
- the briquetting machine, that may have a bin for intermediate storage of briquettes on its discharge side, is followed by a conveyor for feeding the gasification reactor designed as fixed-bed gasifier and a rotary gate valve (2) for the briquettes, in which pipelines (5, 22, 23) and pipelines with distributors for air and/or water steam and/or gas are installed so that they go far into the reactor interior, and in which
- the reactor core is poured out with ceramic lining (11) and jacketed such that a water-tight annular gap (6) is formed that is in connection with the water inlet (9), and in which
- the lower section of gasifier core has a number of air inlets (10, 17), and in which the bottom (12) of gasifier reactor is shaped conically with the cone vertex showing to the top, and in which the lower end is closed by a movable annular grate (13) for ash removal by means of the sluice (15), and in which
- a pipe (8) below the reactor core is located laterally to it and provided with an opening in the external jacket of gasifier such that this opening is again connected with a gas cooler, gas scrubber and gas dryer through a pipeline, and in which
- instruments are provided for control of air and steam flow rates, for control of input (1), measuring sensors (3, 7, 14, 18, 20, 21) for various parameters like pressure, temperature, mass flow rates, filling levels and chemical composition of gases generated in the gasification reactor, and in which
- the water preparation system consisting of tank (33) with feed inlet (35) and discharge outlet (34), a number of chambers (A to I) split by partition walls (39) with overflows (40, 43) and consisting of the inlet chamber (A) with measuring sensors (37, 38) for detection of process-specific parameters and a number of downstream settling chambers for settled matter, and one further light-matter separator (41, 42) located on the downstream side, with inlet through one upper pipe nozzle carrying a coalescence separator consisting of a pipe with internal knitted-wire fabric, and in which
- one of the chambers is designed as mixing and dosing chamber with agitator (36) for precipitation of suspended matter and dissolved substances by means of precipitation und flocculation agents, and in which
- a biofilter installed on the downstream side of the first and second drying unit is equipped with filter cloths and/or other biostructures and/or centrifuge and/or electrostatic modules in which even microbes are settled for metabolism of organic and inorganic substances on a structure-forming supporting material, and in which the biofilter has spraying nozzles for water and/or nutrient solutions to be added to the biofilter.

## Revendications

1. Procédé pour le traitement et l'exploitation de déchets solides et/ou liquides et/ou de leurs mélanges, notamment pour l'exploitation énergétique précieuse de leurs composants organiques, au cours d'une
- première étape de procédé, les composants issus d'un mélange de déchets et détectés à l'oeil nu et à la main étant triés en fonction des groupes de matières premières des métaux, du verre, des plastiques, du papier, des compounds et des matériaux composites et d'autres matières, et étant séparés les uns des autres en séchant d'abord préalablement le courant de matières à traiter et en purifiant l'air sortant chargé de vapeur d'eau et d'autres matières volatiles et, ensuite, en séparant le matériau sec, extrêmement désodorisé, au cours d'un premier criblage des boues minérales, comme le sable, la terre et les particules et, ensuite, en extrayant les métaux ferreux et les métaux non-ferreux par un tri à la main ou à la machine, et en amenant les matières premières triées et stockées en fonction du groupe de matières premières au recyclage traditionnel, et au cours d'une
- seconde étape de procédé, le matériau restant qui n'a pas été trié étant broyé préalablement jusqu'à obtention d'un calibre compris entre environ 150 mm et 250 mm, et en séparant à partir de cela de nouveau les composants métalliques, triés en fonction des métaux ferreux et des métaux non-ferreux et, ensuite, en
- extrayant du matériau l'humidité résiduelle grâce à un second séchage et, ensuite, en
- criblant le matériau à un second niveau de criblage présentant une ouverture de mailles réduite de 50% par rapport au premier niveau de criblage et, ensuite, en faisant flotter la matière filtrée et, ensuite, en
- compressant de nouveau le matériau ainsi libéré de la fraction minérale en broyant de nouveau, parallèlement à cela, les restes de matière criblée, en séparant de nouveau de celle-ci les composants métalliques et en rassemblant le matériau de nouveau broyé avec le matériau en suspension de manière à ce qu'il ne reste plus qu'un matériau se composant presque uniquement de matières organiques et
- le matériau organique obtenu ainsi après le broyage secondaire et après la flottaison est porté à une teneur en humidité définie en fonction du procédé, en définissant l'addition dosée de liquide, comme les boues de clarification ou autres boues, et est ainsi compressé en briquettes de sorte à générer un propre réchauffement du mélange de matières à plus de 150°C, au cours d'une
- troisième étape de procédé, un gaz exempt de goudron et pouvant être utilisé sur le plan énergétique étant généré à partir des briquettes ainsi obtenues à une température de gazéification comprise entre environ 300°C et 450°C et en amenant du gaz par le biais d'un lit de coke incandescent à une température comprise entre environ 1 000°C et 1 400°C, en amenant d'abord les briquettes ainsi que de l'oxygène atmosphérique et/ou de la vapeur d'eau au processus de gazéification, la vapeur d'eau étant générée dans un espace annulaire (6) situé entre l'enveloppe intérieure et l'enveloppe extérieure du réacteur de gazéification et étant répartie dans la zone inférieure et la zone supérieure du réacteur de gazéification ainsi qu'à l'intérieur du réacteur de gazéification et
- le dosage de la vapeur d'eau étant commandé en fonction de la pression, de la température, des flux massiques et de la composition chimique du gaz et
- le gaz étant évacué du coeur du réacteur de gazéification après avoir traversé le lit de coke et
- suite à cela, le gaz étant refroidi rapidement à une température comprise entre 30°C et 60°C, lavé et séché et,
- au cours d'une quatrième étape de procédé, de l'énergie thermique étant générée directement à partir du gaz et/ou de l'énergie électrique étant générée à partir de là, et de l'énergie thermique étant générée à partir de la chaleur résiduelle du traitement gazeux et/ou de l'énergie électrique étant générée dans une pile à combustible au cours du procédé catalytique par oxydation des composants oxydables contenus dans le gaz en utilisant sous forme d'énergie thermique la chaleur résiduelle de l'air sortant de la pile à combustible, et
- au cours d'un procédé secondaire, l'eau de refroidissement et l'eau de séchage étant traitées à partir de l'air sortant et de la vapeur, et l'eau de lavage étant traitée dans le circuit, les mélanges d'impuretés en résultant étant rajoutés de nouveau au produit d'entrée sous forme de matériau avant sa compression en briquettes en purifiant l'air sortant.

2. Dispositif pour la mise en oeuvre du procédé selon la revendication 1, se composant des blocs de composants modulaires dispositif d'alimentation, dispositif de préséchage, dispositif de précriblage, dispositif de séparation des métaux, dispositif de tri, système de collecteurs avec récipients de stockage, prébroyeur avec dispositif de séparation des métaux, dispositif de séchage, dispositif de criblage, broyeur secondaire avec dispositif de séparation des métaux, dispositif de flottaison, dispositif de compression en briquettes, biofiltre, dispositif de traitement de l'eau, convoyeurs, réacteur de gazéification, machine à combustion interne avec générateur électrique, brûleur pour la génération directe de chaleur ou pile à combustible pour l'oxydation gazeuse,
- le dispositif de tri étant une trieuse à bande transporteuse précédée d'un premier dispositif de séchage, d'un premier dispositif de criblage et d'un séparateur de métaux et pouvant être actionné manuellement ou automatiquement et auquel sont associés des récipients de collecte et de stockage pour les groupes de matières premières comme le métal, le verre, le plastique, le papier, le carton, le carton fort et/ou les matériaux composites et
- un biofiltre étant suivi d'une évacuation pour l'air sortant qui comprend des éléments filtrants mécaniques et électrostatiques ainsi que des cultures microbiennes et des pulvérisateurs pour l'eau et/ou des solutions nutritives destinées à alimenter le biofiltre et
- ledit biofiltre étant suivi d'un broyeur destiné à broyer préalablement le matériau non trié et d'un dispositif destiné à séparer les composants métalliques ainsi que d'un second dispositif de criblage dont le niveau de criblage présente une ouverture de mailles réduite d'environ 50% par rapport au premier niveau de criblage et dont l'enlèvement de la matière criblée s'effectue par une bande transporteuse menant vers un dispositif de flottaison et dont l'enlèvement de la matière criblée restante s'effectue par une bande transporteuse menant vers un prébroyeur à séparateur de métaux et
- ce dispositif de flottaison se composant d'une cuve de flottaison (26) à fond incliné (28) dans laquelle se trouvent des injecteurs d'air comprimé (27) présentant des caractéristiques définies permettant de faire tourbillonner le matériau devant flotter, et pour lequel le canal de collecte (30) ainsi que les vis sans vin (29 et 32) pour les résidus de minéraux sont disposés en face du poste d'entrée du matériau et
- les matériaux organiques étant transportés du dispositif de flottaison et du broyage préalable à l'aide d'une bande transporteuse en passant par une bascule à bande et un capteur d'humidité pour arriver dans un dispositif de compression et une unité d'homogénéisation faisant office de dispositif de compression en briquettes, la bascule à bande et le capteur d'humidité étant raccordés par un ordinateur de process à un dispositif de dosage pour l'addition dosée de liquides et/ou de boues et,
- le dispositif de compression en briquettes qui peut être suivi d'un réservoir de stockage intermédiaire des briquettes se raccordant au réacteur de gazéification par le biais d'un convoyeur, ledit réacteur étant un gazéificateur à cuve à lit fixe et présentant une vanne rotative (2) pour briquettes et dont la zone supérieure comprend des conduites (5, 22, 23) et des conduites munies de diffuseurs d'air et/ou de vapeur d'eau et/ou de gaz pénétrant jusqu'à l'intérieur du réacteur et
- le coeur du réacteur étant garni de céramique (11) et son cuvelage étant tel qu'il se forme un espace annulaire (6) étanche à l'eau qui est relié à une admission d'eau (9) et
- plusieurs admissions d'air (10, 17) se trouvant dans la zone inférieure du coeur du réacteur et le fond (12) du réacteur de gazéification étant de forme conique, la pointe du cône étant dirigée vers le haut et l'extrémité inférieure étant fermée par une grille (13) annulaire mobile destinée à l'enlèvement des cendres volantes au moyen de la vanne (15) et
- un tuyau (8) relié à un orifice situé dans l'enveloppe extérieure du gazéificateur étant disposé en dessous du coeur du réacteur sur le côté de celui-ci, et cet orifice étant relié à son tour par une conduite à un refroidisseur de gaz, un laveur de gaz et un sécheur de gaz et
- le réacteur de gazéification comprenant des capteurs de mesure (3, 7, 14, 18, 20, 21) pour plusieurs paramètres, comme la pression, la température, les flux massiques, les niveaux de remplissage et la composition chimique du gaz généré, afin de commander les quantités d'air et de vapeur ainsi que l'entrée de matière (1) et
- l'installation de traitement de l'eau, se composant d'un réservoir (33) muni d'une admission (35) et d'une évacuation (34), présentant plusieurs chambres (A à I) divisées par des parois séparatrices (39) munies de trop-pleins (40, 43), comme la chambre d'admission (A) munie de capteurs de mesure (37, 38) pour la détection de paramètres spécifiques au procédé et plusieurs de ces chambres de sédimentation placées à la suite pour les matières en sédimentation et un séparateur de matière légères (41, 42), placé à la suite, muni d'une admission et relié par une tubulure supérieure sur laquelle se trouve un séparateur à coalescence composé d'un tuyau comprenant de la toile métallique à l'intérieur et
- l'une des chambres étant configurée sous forme de chambre de mélange et de dosage munie d'un mélangeur (36) destiné à précipiter les matières en suspension et les matières dissoutes à l'aide de précipitants et de floculants et
- l'un des biofiltres, placé à la suite du premier et du second dispositif de séchage, étant équipé de tissus filtrants et/ou d'autres biostructures et/ou d'une centrifugeuse et/ou de composants électrostatiques, sur lequel se sont également fixés des microbes pour le métabolisme des matières organiques et anorganiques sur un support formant une structure et dans lequel sont disposés des pulvérisateurs pour l'eau et/ou des solutions nutritives destinées à l'alimentation de celui-ci.
